# EUROPEAN PATENT SPECIFICATION

(11) **EP 1 538 783 B1**
(45) Date of publication and mention of the grant of the patent: **08.09.2010**
(21) Application number: 05290347.3
(22) Date of filing: 26.09.2001
(51) Int. Cl.: H04L 12/28

(54) **Telecommunication system with distributed broadband remote access servers**
Telekommunicationssystem mit verteilten Breitband-Fernzugriffsservern
Système de télécommunications avec serveurs d'accès à distance à bande large distribués

(43) Date of publication of application: 08.06.2005
(62) Divisional of application: 01402462.4
(73) Proprietor: Alcatel Lucent, 75008 Paris (FR)
(72) Inventor: Verbesselt, Ivan Anton, 1840 Londerzeel (BE)
(74) Representative: Narmon, Gisèle Marie Thérèse

(56) References cited:
- WO-A-01/31856
- CRAY A: "GIVING THE EDGE TO AGGREGATION" DATA COMMUNICATIONS, MCGRAW HILL. NEW YORK, US, vol. 27, no. 16, 1 November 1998 (1998-11-01), pages 33-34, XP000785272 ISSN: 0363-6399
- D. MITTON, M. BEADLES: "Network access server requirements next generation (NASREQNG) NAS model" RFC2881, July 2000 (2000-07), XP002191789
- NILSSON P ET AL: "ANX-HIGH-SPEED INTERNET ACCESS" ON - ERICSSON REVIEW, ERICSSON. STOCKHOLM, SE, no. SPEC INT ISS, 1998, pages 24-31, XP000751712 ISSN: 0014-0171
- GIESELER S: "TUNNELBAU. REMOTE-ACCESS-SERVER ALS BASIS FUER VIRTUAL PRIVATE NETWORKS" NET - ZEITSCHRIFT FUER KOMMUNIKATIONSMANAGEMENT, HUTHIG VERLAG, HEILDERBERG, DE, vol. 52, no. 8/9, 1998, pages 38-40, XP000782761 ISSN: 0947-4765

## Description

The present invention relates to a primary tier broadband remote access server to be used in a telecommunication system comprising an access network to which a plurality of subscribers are coupled, a core network coupled to said access network and to which a plurality of network service providers are coupled, and a secondary tier broadband remote access server adapted to connect said subscribers to said network service providers via said access network and said core network, said secondary tier broadband remote access server being further adapted to aggregate connections from subscribers towards said network service providers into a concentrated communication pipes.

Such a telecommunication system is already known in the art. Broadband Remote Access Servers [BRAS] have been introduced in end-to-end service delivery systems to enhance the scaleability of broadband access deployments, e.g. for Digital Subscriber Lines [DSL]. The main services provided by these servers are as follows:
- allow for a flexible service selection by the end user or subscriber towards network service providers;
- increase the scaleability of the system by providing session aggregation into relatively bigger concentrated pipes towards the network service providers;
- be a flexible interface between the access network, generally operating in Asynchronous Transfer Mode [ATM], and data backbones of operators; and
- be a flexible wholesale access point between Network Access Providers [NAP] coupled to the server and Network Service Providers [NSP].

Meanwhile, a number of evolutions are gradually changing the scaleability constraints and hence increasingly stressing the above session aggregation. This is a result of an increasing port density at the NAP's side and of an increasing uptake of required services.

Both constraints are currently driving the service deployment, and thus the broadband remote access server, deeper into the network, i.e. closer to the subscriber. The ultimate case being the integration of the functionality of the broadband remote access server into the access node interconnecting the access network and the subscribers.

As a result of such a deployment, broadband remote access servers are no longer maintained into a confined geographical portion of the access network, which poses a significant scaleability problem. The cost-of-ownership will for instance be increased because of the necessity of operating more complex devices deeper in the network.

Additionally, today's broadband remote access server implementations are addressing considerably more functionality than strictly needed for addressing the initial objective of scaleability through aggregation. Typically, a value-added functionality, such as intelligent caching, firewalling, Authentication-Authorization-Accounting [AAA], associated to the broadband remote access server, is preferably dealt with as high as possible in the network. This is a consequence of the significant amount of control and management it requires. In addition, deploying the value-added functionality at a higher level in the network allows for some interesting economies of scale.

An object of the present invention is to provide a broadband remote access server for a telecommunication system of the above known type but which is adapted to achieve the required services and value-added functionality while remaining relatively economic and simple to implement.

According to the invention, this object is achieved due to the fact that said primary tier broadband remote access server interfaces said access network with said core network and includes added-value functionality
- to classify incoming flows of upstream traffic from said subscribers towards network service providers into session aggregations on basis of a local algorithm,
- to aggregate predetermined incoming flows into first communication pipes in said core network towards network service providers and according to said session aggregations, and
- to signal to said secondary tier broadband remote access server to aggregate predetermined incoming flows into second communication pipes in said access network according to said session aggregations.

The aggregation function of the broadband remote access server, hereafter also referred to as secondary tier broadband remote access server in order to distinguish form the primary tier broadband remote access server, located relatively deep in the network, relieves the connection burden on the access node, which is even exacerbated due to the moving of the primary tier broadband remote access server higher in the network. This further allows the primary tier broadband remote access server to be more scaleable and deployable. Moreover, the primary and secondary tier broadband remote access servers collaborate such as to aggregate sessions in such a way that the same functionality is offered as from a known 'monolithic' broadband remote access server. The invention relies thus on a multi-tier network topology where the different components of the broadband remote access server's functionality can be flexibly shifted in the network and collaborate to achieve dynamic aggregation. This further allows to decrease cost-of-ownership and management complexity since the added value functionality (caching, fire-walling, AAA, ...) of the primary tier broadband remote access server is dealt with as high as possible in the network.

It is to be noted that a telecommunication system wherein subscribers are coupled to network service providers via an access network and a core network is also known from other document. For instance, the document of CRAY A: "GIVING THE EDGE TO AGGREGATION" DATA COMMUNICATIONS, MCGRAW HILL. NEW YORK, US, Vol. 27, no. 16, 1 November 1998 (1998-11-01), pages 33-34, XP000785272 ISSN: 0363-6399, discloses such a telecommunication network. However, in this known document, the telecommunication network uses a Digital Subscriber Line Access Multiplexer [DSLAM] rather than a Broadband Remote Access Server [BRAS]. This known document doesn't also not disclose that functions of the BRAS are split into a Primary Tier Broadband Remote Access Server and a Secondary Tier Broadband Remote Access Server. The same applies to other known telecommunication networks, such as those discloses by D. MITTON and M. BEADLES in "Network access server requirements next generation (NASREQNG) NAS model" RFC2881, [Online] July 2000 (2000-07), XP002191789 www.ietf.org, and by NILSSON et al. in "NX-HIGH-SPEED INTERNET ACCESS" ON-ERICSSON REVIEW, ERICSSON, STOCKHOLM, SE, no. SPEC INT ISS, 1998, pages 24-31, XP000751712 ISSN: 0014-0171.

Another characterizing embodiment of the present invention is that said primary tier broadband remote access network is adapted to use label switching [L2] technology between said primary tier broadband remote access server and said secondary tier broadband remote access server.

The label switching technology corresponds for instance to Layer 2 [L2] connections of the OSI model. This technology allows the telecommunication system to operate according to protocols such as Asynchronous Transfer Mode [ATM], Frame Relay [FR], Multi Path Line Switching [MPLS], Tag Switching, ...

The present invention further relates to a secondary tier broadband remote access server to be used in a telecommunication system comprising an access network to which a plurality of subscribers are coupled and a core network coupled to said access network and to which a plurality of network service providers are coupled, said secondary tier broadband remote access server being adapted to connect said subscribers to said network service providers via said access network and said core network, and being further adapted to aggregate connections from subscribers towards said network service providers into concentrated communication pipes.

According to the invention, this secondary tier broadband remote access server is located in said access network close to said subscribers and is adapted to receive signaling from a primary tier broadband remote access server located deeper in said access network, in order to aggregate predetermined incoming flows from said subscribers into communication pipes in said access network according to session aggregations defined by said primary tier broadband remote access server.

Moreover, said primary tier broadband remote access server interfaces said access network with said core network and includes added-value functionality
- to classify incoming flows of upstream traffic from said subscribers towards network service providers into session aggregations on basis of a local algorithm,
- to aggregate predetermined incoming flows into first communication pipes in said core network towards network service providers and according to said session aggregations, and
- to signal to said secondary tier broadband remote access server to aggregate predetermined incoming flows into second communication pipes in said access network according to said session aggregations.

The present invention further also relates to an access multiplexer to be used in a telecommunication system for interconnecting subscribers to an access network.

According to the invention, this access multiplexer integrates a secondary tier broadband remote access server adapted to receive signaling from a primary tier broadband remote access server located deeper in said access network, in order to aggregate predetermined incoming flows from said subscribers into communication pipes in said access network according to session aggregations defined by said access server.

Furthermore, said telecommunication network further comprises a core network coupled to said access network and to which a plurality of network service providers are coupled, and said primary tier broadband remote access server interfaces said access network with said core network and includes added-value functionality
- to classify incoming flows of upstream traffic from said subscribers towards network service providers into session aggregations on basis of a local algorithm,
- to aggregate predetermined incoming flows into first communication pipes in said core network towards network service providers and according to said session aggregations, and
- to signal to said secondary tier broadband remote access server to aggregate predetermined incoming flows into second communication pipes in said access network according to said session aggregations.

Further characterizing embodiments of the present telecommunication system with distributed broadband remote access servers are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

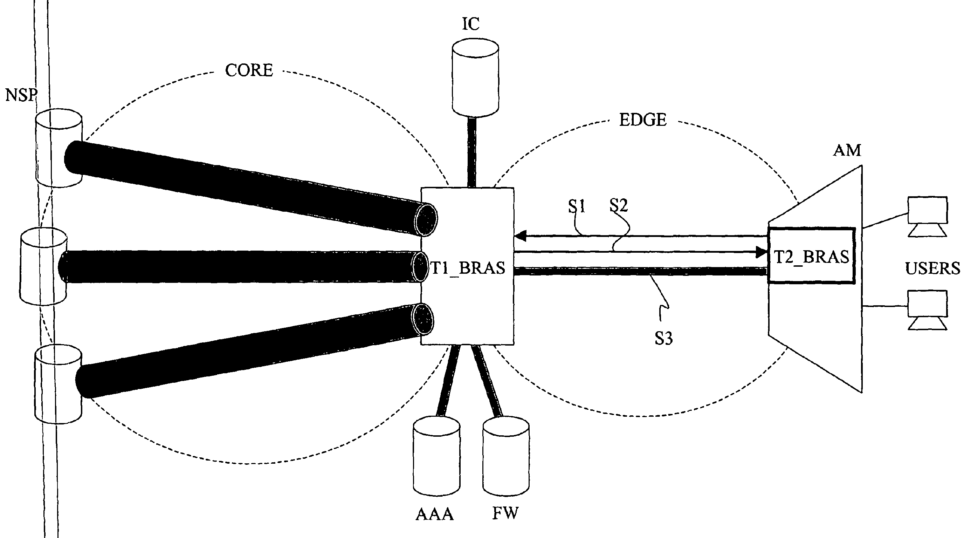

The above and other objects and features of the invention will become more apparent and the invention itself will be best understood by referring to the following description of an embodiment taken in conjunction with the accompanying drawings wherein the figure represents a telecommunication system with distributed broadband remote access servers T1_BRAS and T2_BRAS according to the invention.

The telecommunication system shown at the figure comprises an access network EDGE interconnected to a core network CORE via a primary tier broadband remote access server T1_BRAS. A plurality of subscribers USERS are coupled to the access network via an access multiplexer AM which is for instance a digital subscriber line access multiplexer [DSLAM]. This access multiplexer AM is associated to or embeds the functions of a secondary tier broadband remote access server T2_BRAS. The access multiplexer AM can thus be seem as being an access aggregation node. In other words, the secondary tier broadband remote access server T2_BRAS can be seen as integrated into the access multiplexer AM. A plurality of network service providers NSP are coupled to the core network, and the broadband remote access servers T1_BRAS and T2_BRAS are adapted to connect the subscribers USERS to these network service providers.

In the core network CORE, the primary tier broadband remote access server T1_BRAS is adapted to aggregate connections from the subscribers towards the network service providers NPS into concentrated communication pipes whilst, in the access network EDGE, the secondary tier broadband remote access server T2_BRAS, located closer to the subscribers USER, is adapted to aggregate connections from these subscribers towards the primary tier server T1_BRAS into second concentrated communication pipes. The upstream connections from the subscribers USER, i.e. originated from a Customer Premises Equipment [CPE], aggregated by the secondary tier server T2_BRAS into the second communication pipes through the access network EDGE, are aggregated by the primary tier server T1_BRAS into bigger concentrated pipes towards the providers NPS through the core network CORE. The primary and secondary tier servers collaborate such as to aggregate sessions in such a way that the same functionality is offered as from a 'monolithic' broadband remote access server (BRAS).

The telecommunication system relies on a multi-tier network topology where different components of the value-added BRAS functionality, such as intelligent caching IC, firewalling FW, Authentication-Authorization-Accounting AAA, can be flexibly shifted in the network and collaborate in order to achieve dynamic aggregation.

It is further assumed that a [L2] label switching technology, e.g. Asynchronous Transfer Mode [ATM], Frame Relay [FR], Multi Path Line Switching [MPLS] or Tag Switching, is available between the tier servers T1_BRAS and T2_BRAS.

The operation of the primary tier T1_BRAS and secondary tier T2_BRAS broadband remote access servers is as follows.

All upstream traffic from a subscriber USER, i.e. a user session, is by default sent towards the primary tier server T1_BRAS onto a default label "Ld" by the secondary tier server T2_BRAS. This transmission is indicated by S1 on the figure.

The primary tier server T1_BRAS classifies the incoming flows carried on basis of a local algorithm. Such a local algorithm is for instance the successful completion of a "PPP" session establishment either through local AAA or through proxy AAA, or of a "PPP" session establishment through "L2TP" tunneling, or through other in-band or out-of-band session establishment or service selection mechanisms.

The primary tier server T1_BRAS then relies on the control plane of the label switching technology between T1_BRAS and T2_BRAS, as indicated by S2, to signal to the secondary tier server T2_BRAS that it has to forward some selected flows onto newly established or pre-provisioned label connections, indicated by S3 on the figure.

It is to be noted that the mechanisms for establishing the [L2] label switched connection are dependent on the [L2] label switching technology used and are beyond the scope of this invention.

In the above method, the criteria to shift certain flows to dedicated label connections can be manifold. Some examples are given below:
- all traffic to be forwarded from the primary tier server T1_BRAS to a predetermined network service provider NSP;
- all traffic to be forwarded to a predetermined network service provider NSP with a given traffic/QoS (Quality-of-Service) profile or a given service specification;
- all traffic entitled to certain packages of value-add processing, e.g. intelligent caching IC, fire-walling FW or Authentication-Authorization-Accounting AAA; and/or
- all traffic with predetermined service attributes, e.g. voice or data.

Once a user session is added to such a dedicated or aggregated label connection, the primary tier server T1_BRAS has the ability to flexibly invoke its value-add functionality, e.g. caching, fire-walling, ..., for the different aggregated flows. In fact, the aggregated flows can be cut-through to dedicated companion servers in the primary tier server T1_BRAS realm without relying on the store-and-forward engines of the primary tier server T1_BRAS.

As an example, user sessions aggregated into flows that are not entitled to value-add post-processing can immediately be cut-through to a network service provider NSP, e.g. a Virtual Private Network [VPN] service provider, without posing an additional burden onto the store-and-forward engines of the primary tier server T1_BRAS.

Optionally, the secondary tier server T2_BRAS can autonomously perform the same redirection action for the downstream traffic. This aggregation need not be identical.

While the components of the broadband remote access servers T1_BRAS and T2_BRAS can rely on the control plane offered by the [L2] label switching platform to signal the desired aggregation, some extensions have be made to the latter in order to truly accommodate the Broadband Remote Access Servers or BRAS functional segregation. One such an example is aggregation security. Indeed, once user sessions have been associated to 'aggregated flows', e.g. as per AAA mechanisms as referred to above, security issues might arise since users could perform address spoofing within the same aggregated flow. This can for instance be achieved by picking another [L3] address out of the VPN field associated to the network service provider NSP and by performing a Denial of Service [DOS] attack on the spoofed address. The latter is typically prohibited in monolithic broadband remote access servers that always check the association between the [L3] address and the [L2] user label prior to forwarding on a per packet basis. In order for a segregated BRAS model, according to the present invention, to exhibit the same level of security, this behavior will have to be addressed at the aggregation point, i.e. by the secondary tier server T2_BRAS. The solution is to have the primary tier server T1_BRAS imposing an 'aggregation specification' onto the secondary tier server T2_BRAS thus enforcing the same aggregation rules to be applied on a per packet basis, irrespective of where the aggregation function actually takes place. This has the advantage of having the same level of control and ease of management as with the monolithic broadband remote access servers, without being forced to manage the secondary tier servers T2_BRAS very extensively, if at all.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A primary tier broadband remote access server (T1_BRAS) to be used in a telecommunication system comprising an access network (EDGE) to which a plurality of subscribers (USERS) are coupled, a core network (CORE) coupled to said access network and to which a plurality of network service providers (NSP) are coupled, and a secondary tier broadband remote access server (T2_BRAS) adapted to connect said subscribers to said network service providers via said access network and said core network,
said secondary tier broadband remote access server (T2_BRAS) being further adapted to aggregate connections from subscribers towards said network service providers into concentrated communication pipes,
***characterized in that*** said primary tier broadband remote access server (T1_BRAS) interfaces said access network (EDGE) with said core network (CORE) and includes added-value functionality
- to classify incoming flows of upstream traffic from said subscribers (USERS) towards network service providers (NSP) into session aggregations on basis of a local algorithm,
- to aggregate predetermined incoming flows into first communication pipes in said core network towards network service providers (NSP) and according to said session aggregations, and
- to signal (S2) to said secondary tier broadband remote access server (T2_BRAS) to aggregate predetermined incoming flows into second communication pipes in said access network according to said session aggregations.

2. The primary tier broadband remote access server (T1_BRAS) according to claim 1, ***characterized in that*** said access network (EDGE) is adapted to use label switching [L2] technology between said primary tier broadband remote access server (T1_BRAS) and said secondary tier broadband remote access server (T2_BRAS).

3. A secondary tier broadband remote access server (T2_BRAS) to be used in a telecommunication system comprising an access network (EDGE) to which a plurality of subscribers (USERS) are coupled and a core network (CORE) coupled to said access network and to which a plurality of network service providers (NSP) are coupled,
said secondary tier broadband remote access server (T2_BRAS) being adapted to connect said subscribers to said network service providers via said access network and said core network, and being further adapted to aggregate connections from subscribers towards said network service providers into concentrated communication pipes,
***characterized in that*** said secondary tier broadband remote access server (T2_BRAS) is located in said access network (EDGE) close to said subscribers (USERS) and is adapted to receive signaling (S2) from a primary tier broadband remote access server (T1_BRAS) located deeper in said access network, in order to aggregate predetermined incoming flows from said subscribers into communication pipes in said access network according to session aggregations defined by said primary tier broadband remote access server,
***and in that*** said primary tier broadband remote access server (T1_BRAS) interfaces said access network (EDGE) with said core network (CORE) and includes added-value functionality
- to classify incoming flows of upstream traffic from said subscribers (USERS) towards network service providers (NSP) into session aggregations on basis of a local algorithm,
- to aggregate predetermined incoming flows into first communication pipes in said core network towards network service providers (NSP) and according to said session aggregations, and
- to signal (S2) to said secondary tier broadband remote access server (T2_BRAS) to aggregate predetermined incoming flows into second communication pipes in said access network according to said session aggregations.

4. The secondary tier broadband remote access server (T2_BRAS) according to claim 3, ***characterized in that*** said access network (EDGE) is adapted to use label switching [L2] technology between said primary tier broadband remote access server (T1_BRAS) and said secondary tier broadband remote access server (T2_BRAS).

5. An access multiplexer (AM) to be used in a telecommunication system for interconnecting subscribers (USERS) to an access network (EDGE),
***characterized in that*** said access multiplexer (AM) integrates a secondary tier broadband remote access server (T2_BRAS) adapted to receive signaling (S2) from a primary tier broadband remote access server (T1_BRAS) located deeper in said access network (EDGE), in order to aggregate predetermined incoming flows from said subscribers (USERS) into communication pipes in said access network according to session aggregations defined by said access server,
***in that*** said telecommunication network further comprises a core network (CORE) coupled to said access network (EDGE) and to which a plurality of network service providers (NSP) are coupled,
***and in that*** said primary tier broadband remote access server (T1_BRAS) interfaces said access network (EDGE) with said core network (CORE) and includes added-value functionality
- to classify incoming flows of upstream traffic from said subscribers (USERS) towards network service providers (NSP) into session aggregations on basis of a local algorithm,
- to aggregate predetermined incoming flows into first communication pipes in said core network towards network service providers (NSP) and according to said session aggregations, and
- to signal (S2) to said secondary tier broadband remote access server (T2_BRAS) to aggregate predetermined incoming flows into second communication pipes in said access network according to said session aggregations.

6. The access multiplexer according to claim 5, ***characterized in that*** functions of said secondary tier broadband remote access server (T2_BRAS) are embedded into said access multiplexer (AM) which is an access aggregation node.

7. The access multiplexer according to claim 5, ***characterized in that*** said access multiplexer (AM) is a Digital Subscriber Line Access Multiplexer.

8. The access multiplexer according to claim 5, ***characterized in that*** said access network (EDGE) is adapted to use label switching [L2] technology between said primary tier broadband remote access server (T1_BRAS) and said secondary tier broadband remote access server (T2_BRAS).

## Patentansprüche

1. Ein primärer Tier-Breitband-Fernzugriffsserver (T1_BRAS) zur Verwendung in einem Telekommunikationssystem mit einem Zugangsnetzwerk (EDGE), an welches eine Mehrzahl von Teilnehmern (USERS) gekoppelt sind, einem Kernnetzwerk (CORE), welches an das besagte Zugangsnetzwerk gekoppelt ist und an welches eine Mehrzahl von Internetdienstanbietern (NSP) gekoppelt sind, und ein sekundärer Tier-Breitband-Fernzugriffsserver (T2_BRAS), welcher dazu ausgelegt ist, die besagten Teilnehmer über das besagte Zugangsnetzwerk und das besagte Kernnetzwerk mit den besagten Internetdienstanbietern zu verbinden,
wobei der besagte sekundäre Tier-Breitband-Fernzugriffsserver (T2_BRAS) weiterhin dazu ausgelegt ist, die Verbindungen von Teilnehmern zu den besagten Internetdienstanbietern in konzentrierte Kommunikations-Pipes zu bündeln,
***dadurch gekennzeichnet, dass*** der besagte primäre Tier-Breitband-Fernzugriffsserver (T1_BRAS) das besagte Zugangsnetzwerk (EDGE) über eine Schnittstelle mit dem besagten Kernnetzwerk (CORE) verbindet und Mehrwert-Funktionalitätsschnittstellen umfasst, um
- eingehende Upstream-Verkehrsströme von den besagten Teilnehmern (USERS) an Internetdienstanbieter (NSP) in Sitzungsbündelungen auf der Basis eines lokalen Algorithmus zu klassifizieren ,
- vorbestimmte eingehende Ströme in erste Kommunikations-Pipes in dem besagten Kernnetzwerk an Internetdienstanbieter (NSP) und gemäß den besagten Sitzungsbündelungen zu bündeln, und
- dem besagten sekundären Tier-Breitband-Fernzugriffsserver (T2_BRAS) zu signalisieren (S2), dass er vorbestimmte eingehende Ströme in zweite Kommunikations-Pipes in dem besagten Kernnetzwerk gemäß den besagten Sitzungsbündelungen bündeln soll.

2. Der primäre Tier-Breitband-Fernzugriffsserver (T1_BRAS) nach Anspruch 1, ***dadurch gekennzeichnet, dass*** das besagte Zugangsnetzwerk (EDGE) für die Verwendung einer Label-Switching [L2]-Technologie zwischen dem besagten primären Tier-Breitband-Fernzugriffsserver (T1_BRAS) und dem besagten sekundären Tier-Breitband-Fernzugriffsserver (T2_BRAS) ausgelegt ist.

3. Ein sekundärer Tier-Breitband-Fernzugriffsserver (T2_BRAS) zur Verwendung in einem Telekommunikationssystem mit einem Zugangsnetzwerk (EDGE), an welches eine Mehrzahl von Teilnehmern (USERS) gekoppelt sind, und einem Kernnetzwerk (CORE), welches an das besagte Zugangsnetzwerk gekoppelt ist und an welches eine Mehrzahl von Internetdienstanbietern (NSP) gekoppelt sind,
wobei der besagte sekundärer Tier-Breitband-Fernzugriffsserver (T2_BRAS) dazu ausgelegt ist, die besagten Teilnehmer über das besagte Zugangsnetzwerk und das besagte Kernnetzwerk mit den besagten Internetdienstanbietern zu verbinden, und weiterhin dazu ausgelegt ist, die Verbindungen von Teilnehmern zu den besagten Internetdienstanbietern in konzentrierten Kommunikations-Pipes zu bündeln,
***dadurch gekennzeichnet, dass*** der besagte sekundäre Tier-Breitband-Fernzugriffsserver (T2_BRAS) in dem besagten Zugangsnetzwerk (EDGE) in Nähe der besagten Teilnehmer (USERS) angeordnet und dazu ausgelegt ist, von einem primären Tier-Breitband-Fernzugriffsserver (T1_BRAS), welcher tiefer in dem besagten Zugangsnetzwerk angeordnet ist, eine Signalisierung (S2) zu empfangen, um vorbestimmte eingehende Ströme von den besagten Teilnehmern in Kommunikations-Pipes in dem besagten Zugangsnetzwerk gemäß den von dem besagten primären Tier-Breitband-Fernzugriffsserver definierten Sitzungsbündelungen zu bündeln,
***und dass*** der besagte primäre Tier-Breitband-Fernzugriffsserver (T1_BRAS) das besagte Zugangsnetzwerk (EDGE) über eine Schnittstelle mit dem besagten Kernnetzwerk (CORE) verbindet und Mehrwert-Funktionalitäten umfasst, um
- eingehende Upstream-Verkehrsströme von den besagten Teilnehmern (USERS) an Internetdienstanbieter (NSP) in Sitzungsbündelungen auf der Basis eines lokalen Algorithmus zu klassifizieren ,
- vorbestimmte eingehende Ströme in erste Kommunikations-Pipes in dem besagten Kernnetzwerk an Internetdienstanbieter (NSP) und gemäß den besagten Sitzungsbündelungen zu bündeln, und
- dem besagten sekundären Tier-Breitband-Fernzugriffsserver (T2_BRAS) zu signalisieren (S2), dass er vorbestimmte eingehende Ströme in zweite Kommunikations-Pipes in dem besagten Kernnetzwerk gemäß den besagten Sitzungsbündelungen bündeln soll.

4. Der sekundäre Tier-Breitband-Fernzugriffsserver (T2_BRAS) nach Anspruch 3, ***dadurch gekennzeichnet, dass*** das besagte Zugangsnetzwerk (EDGE) für die Verwendung einer Label-Switching [L2]-Technologie zwischen dem besagten primären Tier-Breitband-Fernzugriffsserver (T1_BRAS) und dem besagten sekundären Tier-Breitband-Fernzugriffsserver (T2_BRAS) ausgelegt ist.

5. Ein Zugangsmultiplexer (AM) zur Verwendung in einem Telekommunikationssystem, um Teilnehmer (USERS) mit einem Zugangsnetzwerk (EDGE) zu verbinden,
***dadurch gekennzeichnet, dass*** der besagte Zugangsmultiplexer (AM) einen sekundären Tier-Breitband-Fernzugriffsserver (T2_BRAS) integriert, welcher dazu ausgelegt ist, von einem primären Tier-Breitband-Fernzugriffsserver (T1_BRAS), welcher tiefer in dem besagten Zugangsnetzwerk (EDGE) angeordnet ist, eine Signalisierung (S2) zu empfangen, um vorbestimmte eingehende Ströme von den besagten Teilnehmern (USERS) in Kommunikations-Pipes in dem besagten Zugangsnetzwerk gemäß den von dem besagten Zugangsserver definierten Sitzungsbündelungen zu bündeln,
***dass*** das besagte Telekommunikationsnetzwerk weiterhin ein Kernnetzwerk (CORE) umfasst, welches an das besagte Zugangsnetzwerk (EDGE) gekoppelt ist und an welches eine Mehrzahl von Internetdienstanbietern (NSP) gekoppelt sind,
***und dass*** der besagte primäre Tier-Breitband-Fernzugriffsserver (T1_BRAS) das besagte Zugangsnetzwerk (EDGE) über eine Schnittstelle mit dem besagten Kernnetzwerk (CORE) verbindet und Mehrwert-Funktionalitäten umfasst, um
- eingehende Upstream-Verkehrsströme von den besagten Teilnehmern (USERS) an Internetdienstanbieter (NSP) in Sitzungsbündelungen auf der Basis eines lokalen Algorithmus zu klassifizieren ,
- vorbestimmte eingehende Ströme in erste Kommunikations-Pipes in dem besagten Kernnetzwerk an Internetdienstanbieter (NSP) und gemäß den besagten Sitzungsbündelungen zu bündeln, und
- dem besagten sekundären Tier-Breitband-Fernzugriffsserver (T2_BRAS) zu signalisieren (S2), dass er vorbestimmte eingehende Ströme in zweite Kommunikations-Pipes in dem besagten Kernnetzwerk gemäß den besagten Sitzungsbündelungen bündeln soll.

6. Der Zugangsmultiplexer nach Anspruch 5, ***dadurch gekennzeichnet, dass*** Funktionen des besagten sekundären Tier-Breitband-Fernzugriffsservers (T2_BRAS) in dem besagten Zugangsmultiplexer (AM), welcher ein Zugangsbündelungsknoten ist, eingebettet sind.

7. Der Zugangsmultiplexer nach Anspruch 5, ***dadurch gekennzeichnet, dass*** der besagte Zugangsmultiplexer (AM) eine DSL-Vermittlungsstelle ist.

8. Der Zugangsmultiplexer nach Anspruch 5, ***dadurch gekennzeichnet, dass*** das Zugangsnetzwerk (EDGE) für die Verwendung einer Label-Switching [L2]-Technologie zwischen dem besagten primären Tier-Breitband-Fernzugriffsserver (T1_BRAS) und dem besagten sekundären Tier-Breitband-Fernzugriffsserver (T2_BRAS) ausgelegt ist.

## Revendications

1. Serveur d'accès distant à large bande tiers primaire (T1_BRAS) destiné à être utilisé dans un système de télécommunication comprenant un réseau d'accès (EDGE) auquel est connectée une pluralité d'abonnés (USERS), un réseau central (CORE) connecté audit réseau d'accès et auquel est connectée une pluralité de fournisseurs de services de réseau (NSP), et serveur d'accès distant à large bande tiers secondaire (T2_BRAS) adapté pour connecter lesdits abonnés auxdits fournisseurs de services de réseau par le biais dudit réseau d'accès et dudit réseau central, ledit serveur d'accès distant à large bande tiers secondaire (T2_BRAS) étant en outre adapté pour grouper les connexions des abonnés en direction desdits fournisseurs de services de réseau dans des tuyaux de communication concentrés,
***caractérisé en ce* que** ledit serveur d'accès distant à large bande tiers primaire (T1_BRAS) réalise l'interface entre ledit réseau d'accès (EDGE) et ledit réseau central (CORE) et comprend une fonctionnalité à valeur ajoutée
- pour classifier les flux entrants de trafic montant depuis lesdits abonnés (USERS) vers les fournisseurs de services de réseau (NSP) en groupements de session sur la base d'un algorithme local,
- pour grouper des flux entrants prédéterminés en premiers tuyaux de communication dans ledit réseau central vers les fournisseurs de services de réseau (NSP) et conformément auxdits groupements de session, et
- pour signaler (S2) audit serveur d'accès distant à large bande tiers secondaire (T2_BRAS) de grouper des flux entrants prédéterminés en deuxièmes tuyaux de communication dans ledit réseau d'accès conformément auxdits groupements de session.

2. Serveur d'accès distant à large bande tiers primaire (T1_BRAS) selon la revendication 1, ***caractérisé en ce que*** ledit réseau d'accès (EDGE) est adapté pour utiliser la technologie de commutation à étiquette [L2] entre ledit serveur d'accès distant à large bande tiers primaire (T1_BRAS) et ledit serveur d'accès distant à large bande tiers secondaire (T2_BRAS).

3. Serveur d'accès distant à large bande secondaire (T2_BRAS) destiné à être utilisé dans un système de télécommunication comprenant un réseau d'accès (EDGE) auquel est connectée une pluralité d'abonnés (USERS) et un réseau central (CORE) auquel est connectée une pluralité de fournisseurs de services de réseau (NSP),
ledit serveur d'accès distant à large bande tiers secondaire (T2_BRAS) étant adapté pour connecter lesdits abonnés auxdits fournisseurs de services de réseau par le biais dudit réseau d'accès et ledit réseau central, et étant en outre adapté pour grouper les connexions des abonnés en direction desdits fournisseurs de services de réseau dans des tuyaux de communication concentrés,
***caractérisé en ce* que** ledit serveur d'accès distant à large bande tiers secondaire (T2_BRAS) est situé dans ledit réseau d'accès (EDGE) à proximité desdits abonnés (USERS) et il est adapté pour recevoir une signalisation (S2) de la part d'un serveur d'accès distant à large bande tiers primaire (T1_BRAS) situé plus profondément dans ledit réseau d'accès afin de grouper des flux entrants prédéterminés provenant desdits abonnés en tuyaux de communication dans ledit réseau d'accès conformément aux groupements de session définis par ledit serveur d'accès distant à large bande tiers primaire,
***et en ce que*** ledit serveur d'accès distant à large bande tiers primaire (T1_BRAS) réalise l'interface entre ledit réseau d'accès (EDGE) et ledit réseau central (CORE) et comprend une fonctionnalité à valeur ajoutée
- pour classifier les flux entrants de trafic montant depuis lesdits abonnés (USERS) vers les fournisseurs de services de réseau (NSP) en groupements de session sur la base d'un algorithme local,
- pour grouper des flux entrants prédéterminés en premiers tuyaux de communication dans ledit réseau central vers les fournisseurs de services de réseau (NSP) et conformément auxdits groupements de session, et
- pour signaler (S2) audit serveur d'accès distant à large bande tiers secondaire (T2_BRAS) de grouper des flux entrants prédéterminés en deuxièmes tuyaux de communication dans ledit réseau d'accès conformément auxdits groupements de session.

4. Serveur d'accès distant à large bande tiers secondaire (T2_BRAS) selon la revendication 3, ***caractérisé en ce que*** ledit réseau d'accès (EDGE) est adapté pour utiliser la technologie de commutation à étiquette [L2] entre ledit serveur d'accès distant à large bande tiers primaire (T1_BRAS) et ledit serveur d'accès distant à large bande tiers secondaire (T2_BRAS).

5. Multiplexeur d'accès (AM) destiné à être utilisé dans un système de télécommunication pour interconnecter des abonnés (USERS) avec un réseau d'accès (EDGE),
***caractérisé en ce que*** ledit multiplexeur d'accès (AM) intègre un serveur d'accès distant à large bande tiers secondaire (T2_BRAS) adapté pour recevoir une signalisation (S2) de la part d'un serveur d'accès distant à large bande tiers primaire (T1_BRAS) situé plus profondément dans ledit réseau d'accès (EDGE) afin de grouper des flux entrants prédéterminés provenant desdits abonnés (USERS) en tuyaux de communication dans ledit réseau d'accès conformément aux groupements de session définis par ledit serveur d'accès,
***en ce* que** ledit réseau de télécommunication comprend en outre un réseau central (CORE) connecté audit réseau d'accès (EDGE) et auquel est connectée une pluralité de fournisseurs de services de réseau (NSP),
***et en ce* que** ledit serveur d'accès distant à large bande tiers primaire (T1_BRAS) réalise l'interface entre ledit réseau d'accès (EDGE) et ledit réseau central (CORE) et comprend une fonctionnalité à valeur ajoutée
- pour classifier les flux entrants de trafic montant depuis lesdits abonnés (USERS) vers les fournisseurs de services de réseau (NSP) en groupements de session sur la base d'un algorithme local,
- pour grouper des flux entrants prédéterminés en premiers tuyaux de communication dans ledit réseau central vers les fournisseurs de services de réseau (NSP) et conformément auxdits groupements de session, et
- pour signaler (S2) audit serveur d'accès distant à large bande tiers secondaire (T2_BRAS) de grouper des flux entrants prédéterminés en deuxièmes tuyaux de communication dans ledit réseau d'accès conformément auxdits groupements de session.

6. Multiplexeur d'accès selon la revendication 5, ***caractérisé en ce que*** les fonctions dudit serveur d'accès distant à large bande tiers secondaire (T2_BRAS) sont intégrées dans ledit multiplexeur d'accès (AM) qui est un noeud de groupement.

7. Multiplexeur d'accès selon la revendication 5, ***caractérisé en ce que*** ledit multiplexeur d'accès (AM) est un multiplexeur d'accès de ligne d'abonné numérique.

8. Multiplexeur d'accès selon la revendication 5, ***caractérisé en ce que*** ledit réseau d'accès (EDGE) est adapté pour utiliser la technologie de commutation à étiquette [L2] entre ledit serveur d'accès distant à large bande tiers primaire (T1_BRAS) et ledit serveur d'accès distant à large bande tiers secondaire (T2_BRAS).
